# EUROPÄISCHE PATENTSCHRIFT

(11) **EP 0 489 397 B1**
(45) Veröffentlichungstag und Bekanntmachung des Hinweises auf die Patenterteilung: **22.03.1995**
(21) Anmeldenummer: 91120751.2
(22) Anmeldetag: 03.12.1991
(51) Int. Cl.: B27G 19/02, B23Q 11/00, B23Q 5/54

(54) **Schutzhauben-Vorrichtung an Kreissäge**
Protective cover device for circular saws
Capot protecteur pour scie circulaire

(30) Priorität: 04.12.1990 CH 3833/90
(43) Veröffentlichungstag der Anmeldung: 10.06.1992
(73) Patentinhaber: SCHWEIZERISCHE UNFALLVERSICHERUNGSANSTALT SUVA, CH-6002 Luzern (CH)
(72) Erfinder: Leupi, Hans, CH-6253 Uffikon (CH); Wirz, Hansjörg, CH-6023 Rothenburg (CH)
(74) Vertreter: Gustorf, Gerhard, Dipl.-Ing.

(56) Entgegenhaltungen:
- EP-A- 0 394 132
- BE-A- 767 651
- DE-A- 3 340 579
- DE-U- 9 004 162
- DE-U- 9 016 821
- US-A- 1 381 612
- US-A- 4 875 398

## Beschreibung

Die Erfindung betrifft eine Schutzvorrichtung für Kreissägen mit einer Schutzhaube zum Abdecken eines aus einem Tisch nach oben vorstehenden Sägeblatts, wobei die zum Absaugen von Sägespänen eingerichtete Schutzhaube durch zwei eine Parallelogrammführung bildende Tragarme an einem Gestell über Achsen in der Höhe schwenkbar so gelagert ist, daß sie in ihrer Ruhestellung auf dem Tisch aufliegend das Sägeblatt überdeckt, durch ein auf dem Tisch zum Sägeblatt hin zugeführtes Werkstück an ihrer schräg nach oben geneigten Einlaufseite erfaßt und begrenzt angehoben wird und nach dem Durchschieben des Werkstücks selbsttägig in die Ruhestellung zurückkehrt.

Eine solche Schutzhaube ist aus der US-A 4 875 398 bekannt. An dieser sind seitlich zwei Ballengriffe angebracht, die lediglich zur besseren Handhabung der Schutzhaube dienen.

Gegenstand der EP-A 394 132 ist eine Bandsägemaschine, deren Sägeband durch eine Schutzvorrichtung läuft, die das Sägeband vollständig umgibt und gleichzeitig zur Einstellung des Sägespaltes dient. Für diese Höheneinstellung ist ein Hebel vorgesehen, der durch eine Feder mit Gewichtskompensation und gelenkig miteinander verbundenen Armen in einer bestimmten Lage gehalten wird. Ein Anheben durch das Schneidgut ist nicht möglich.

Der Erfindung liegt die Aufgabe zugrunde, eine Schutzvorrichtung für Kreissägen zur Verfügung zu stellen, die bei Bedarf in gewünschten Höhenlagen so eingestellt werden kann, daß die Schutzhaube nicht aufgrund ihres Eigengewichtes wieder auf die am Tisch anliegende Ausgangslage zurückfällt und andererseits die Möglichkeit bietet, aus dieser angehobenen Lage durch ein Werkstück nochmals angehoben zu werden.

Bei einer Schutzvorrichtung der eingangs umrissenen Bauart wird diese Aufgabe erfindungsgemäß dadurch gelöst, daß koaxial zur Schwenkachse eines der beiden Tragarme ein hebelförmiger Heber über eine Bremse schwenkbar am Gestell gelagert ist, über den die Parallelogrammführung der Schutzhaube über dem Tisch in Höhenlagen anhebbar und dort abstützbar ist, aus welchen die Schutzhaube durch ein zugeführtes Werkstück ohne zusätzliche Betätigung des Hebers begrenzt nochmals anhebbar ist.

Bei der Schutzvorrichtung gemäß der Erfindung befindet sich die Schutzhaube in der Ruhelage auf dem Tisch und bedeckt dort das Sägeblatt. Man kann ein Werkstück in Zuführrichtung auf dem Tisch zum Sägeblatt schieben, wobei das Werkstück auf die Einlaufseite der Schutzhaube trifft, die in Zuführrichtung von oben zum Tisch geneigt verläuft. Das Werkstück hebt dann die Schutzhaube beim Vorschieben vom Tisch ab, wobei sie auf dem Werkstück aufliegt. Sobald das Werkstück unter der Schutzhaube hindurchgeschoben oder entgegen der Zuführrichtung aus dem Bereich der Schutzhaube zurückgezogen worden ist, senkt sich die Schutzhaube wieder auf den Tisch. Dadurch sind auch für eine Absaugung optimale Bedingungen gegeben. Die Schutzhaube kann aber auch in eine Höhenlage oberhalb des Tisches angehoben und dort abgestützt werden, wenn das Werkstück beispielsweise zu empfindlich ist, um mit der Schutzhaube in Kontakt zu treten, oder wenn man das Werkstück nicht der vollen Schutzhaubenbelastung aussetzen darf. Das Werkstück kann dann knapp unter der Schutzhaube durchgeschoben werden, ohne sie zu berühren, wobei immer noch ein guter Schutz und eine gute Absaugung realisierbar sind. Auch ein weiteres Anheben der in der gewählten Höhenlage befindlichen Schutzhaube durch das Werkstück bleibt dabei möglich.

All dies wird durch die im Kennzeichen des Anspruch 1 genannten Merkmale wirtschaftlich vorteilhaft und betriebssicher ermöglicht, so daß die Unfallgefahr zumindest sehr erheblich verringert wird.

Da die beiden Tragarme eine Parallelogrammführung bilden, ergeben sich eine präzise Führung und eine exakte Halterung in der Hochstellung; ferner wird ein Kippen der Schutzhaube verhindert. Da der Heber koaxial zu einer der beiden Tragarmachsen angeordnet ist, wird eine einfache Handhabung bei optimaler Halterung erzielt, die in der Hochstellung kein Hindernis für das weitere Anheben der Schutzhaube durch das Werkstück darstellt. Da der hebelförmige Heber mit einem seitlichen, federförmigen Fortsatz unter den Tragarm greift, kann die gesamte Parallelogrammführung angehoben werden.

In Weiterbildung der Erfindung ist vorgesehen, daß die Bremse für den Heber eine Reibschluß erzeugende, einstellbare Feder hat.

Vorzugsweise ist in der Parallelogrammführung eine einstellbare Ausgleichsfeder zur teilweisen Kompensierung des Gewichtes der Schutzhaube angebracht. So kann man die Schutzhaube gerade nur mit der erforderlichen Minimalkraft auf dem Tisch oder auf dem Werkstück aufliegen lassen oder, wenn man dies wünscht, einen erheblicheren Druck auf das Werkstück ausüben, wenn man es dadurch stabilisieren will.

Als Schutz vor weggeschleuderten Stücken, beispielsweise vor Sägespänen, sowie zur Erhöhung der Ansaugleistung kann an der Einlaufseite der Schutzhaube eine durch ein auswechselbares Fenster verschlossene Sichtöffnung vorgesehen sein, die das Sägen nach Sicht trotz Schutzhaube erlaubt. Die Auswechselbarkeit des Fensters erlaubt es, bei geringen Kosten eine optimale Schutzwirkung zu sichern.

Die Schutzhaube ist vorzugsweise am Tragarm horizontal verschieblich feststellbar und auswechselbar angeordnet. Man kann also die Schutzhaube nach dem Lösen der Feststellung vom Tragarm abziehen und durch eine andere, beispielsweise breitere ersetzen. Letzteres kann von Vorteil sein, wenn man mit zum Tisch seitlich geneigtem Sägeblatt arbeiten will, wozu eine breitere Schutzhaube nötig sein kann. Andererseits möchte man normalerweise nicht eine breitere Schutzhaube benützen als unbedingt nötig.

Nach einem weiteren Merkmal der Erfindung ist die Schutzhaube transparent bis durchsichtig, so daß man das Sägeblatt und damit die davon ausgehende Gefahr mit den Augen wahrnehmen kann. Besonders geeignet ist ein schlagfester, robuster Kunststoff für die Schutzhaube.

Um die Schutzhaube selbst nicht zu verschleißen, sind vorzugsweise auswechselbare Kufen an ihr vorgesehen, welche farblich warnend ausgelegt werden können. Solche Kufen können in Form von aufschnappbaren Profilen aus Kunststoff bestehen.

Die Erfindung ist nachstehend an einem Ausführungsbeispiel erläutert, das in der Zeichnung dargestellt ist. Es zeigen:
Figur 1 eine Seitenansicht der Vorrichtung in Ruhestellung,
Figur 2 die Seitenansicht der Vorrichtung mit durch ein Werkstück angehobener Schutzhaube,
Figur 3 die Seitenansicht der Vorrichtung mit durch den Heber über das Werkstück angehobener Schutzhaube,
Figur 4 die Seitenansicht der Vorrichtung mit durch den Heber vollständig angehobener Schutzhaube und
Figur 5 einen gegenüber den Figuren 1 bis 4 vergrößerten Schnitt nach Linie V-V in Figur 1 durch das Heber-Lager.

In den Figuren bedeuten:
- Z: Zuführrichtung von 3
- 1: Vorrichtung
- 11: Gestell von 1.
- 12: Tragarmachse.
- 120: Tragarmhilfsachse.
- 13: Tragarm.
- 130: Parallelogrammarm, oberer.
- 131: Heber, um 12 gebremst und begrenzt schwenkbar.
- 132: Bremse von 131.
- 133: Federscheibe von 132.
- 134: Mutter von 132 zum Spannen von 133.
- 14: Ausgleichsfeder, welche auf nicht gezeigte Weise einstellbar ist.
- 15: Schutzhaubenführung, schwalbenschwanzartig, entlang welcher 13 verschieblich und feststellbar sowie auswechselbar ist.
- 151: Klemmvorrichtung an 15.
- 16: Schutzhaube, welche aus transparentem Kunststoff besteht und bei 15 an 13 angeordnet ist.
- 161: Einlaufseite von 16.
- 162: Sichtöffnung in 16, oben bei 161.
- 163: Fenster in 162, ist auswechselbar durch 164 gehaltert.
- 164: Kufen, aus gelbem (sichtmarkierendem) Kunststoff, welche an 16 auswechselbar aufgeschnappt sind.
- 165: Absaugstutzen, an Absaugvorrichtung anschließbar.
- 2: Kreissäge.
- 21: Tisch von 2.
- 22: Sägeblatt von 2.
- 221: Vorderseite von 2.
- 222: Sägeblattachse.
- 3: Werkstück.

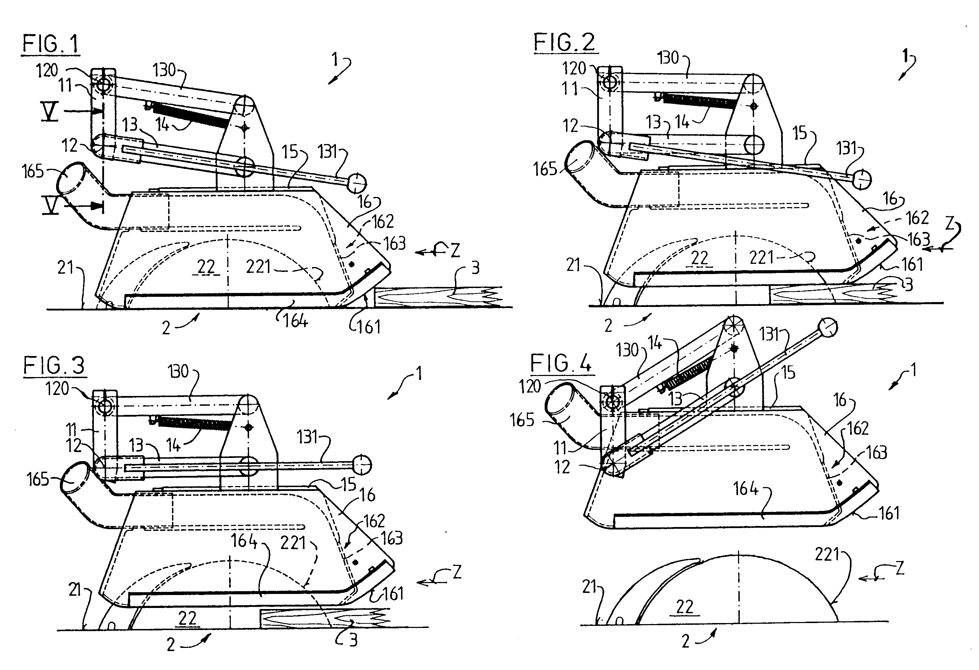

In Figur 1 ist die Vorrichtung in der Ruhestellung gezeigt, in welcher die Schutzhaube 16 das oben zum Tisch 21 vorstehenden Sägeblatt 22 bedeckt und dabei auf dem Tisch 21 aufliegt, wobei ein Werkstück 3 in Vorschubrichtung Z auf dem Tisch 21 liegend zum Sägeblatt 22 hin geschoben wird.

In Figur 2 erkennt man das auf dem Tisch 21 in Vorschubrichtung Z weiter vorgeschobene Werkstück 3, welches im Zuge des Vorschiebens in Vorschubrichtung Z vorerst in nicht gezeigter Weise an der Einlaufseite 161 der Schutzhaube 16 zur Anlage kommt und beim weiteren Vorschieben allmählich unter die sich dabei hebende Schutzhaube 16 und an die Vorderseite 221 des um seine Sägeblattachse 222 rotierenden Sägeblatts 2 gelangt. Dabei hilft die Ausgleichsfeder 14 beim Anheben der Schutzhaube 16. Die Schutzhaube 16 wird beim Anheben bewegt, während der Tragarm 13 um die Tragarmachse 12 geschwenkt wird, weil der Tragarm mit seinem um die Tragarmhilfsachse 120 schwenkenden Parallelogrammarm 130 eine Parallelogrammführung bildet.

Wenn das Werkstück 3 in nicht dargestellter Weise unter der Schutzhaube 16 hindurchgeschoben wurde, legt sich die Schutzhaube durch ihr (von der Ausgleichsfeder 14 nicht kompensiertes) Restgewicht wieder auf den Tisch 21 und gelangt in die in Figur 1 gezeigte Ruhestellung zurück.

Es ist so einerseits immer ein hervorragender Schutz vorhanden, und andererseits ist die Absaugwirkung sehr gut, weil die Zuluftmenge relativ gering gehalten werden kann, was zu hoher Luftgeschwindigkeit führt.

Will man nicht, daß das Werkstück 3 von der Schutzhaube 16 berührt wird, weil es eine empfindliche Oberfläche hat, kann man die Schutzhaube 16 mittels des Hebers 131 auf eine geringfügig über dem Werkstück 3 liegende Höhe (vgl. Fig. 3) anheben, ansonsten aber das Werkstück 3 wie gewöhnlich sägen. Man muß dann zwar einen etwas größeren Zuluftspalt in Kauf nehmen, kann aber diesen Spalt minimal dimensionieren. In Figur 3 wurde aus Gründen der Sichtbarkeit der Luftspalt nicht so klein wie er sein könnte dargestellt.

Weil der Heber 131 die Schutzhaube nur unterstützt hält, kann sie durch einen höheren Teil des Werkstücks 3 leicht weiter angehoben werden, wobei die höchstmögliche Höhe in Figur 4 angedeutet ist, wo man durch den Heber 131 die maximale Anhebung erreicht hat.

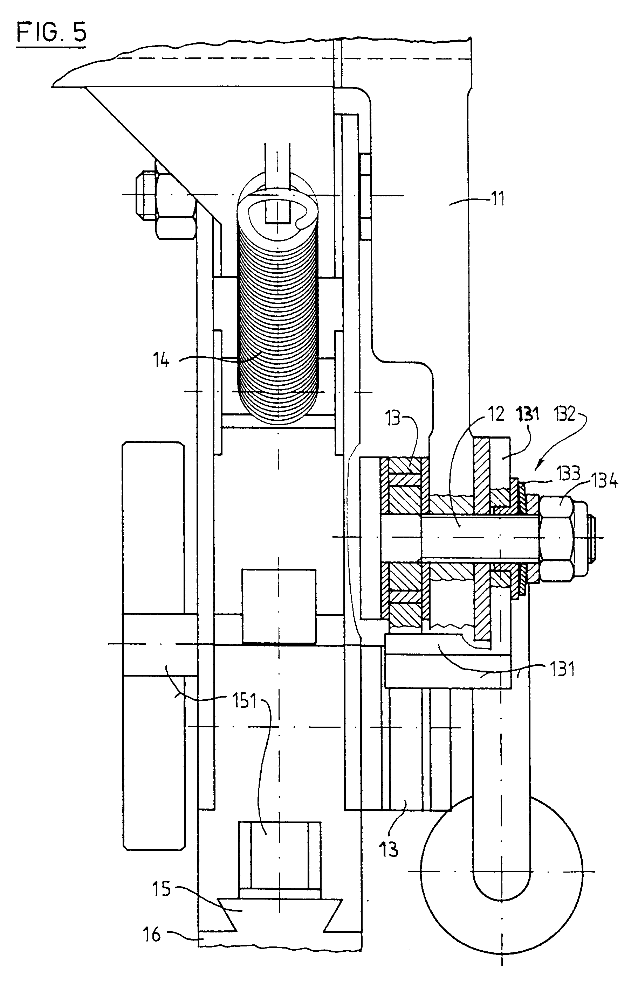

Damit die Schutzhaube 16 auf der durch den Heber 131 bestimmten angehobenen Stellung (z. B. gemäß Figur 3) bleibt, ist der Heber 131 mit einer Bremse 132 ausgestattet, welche durch Spannen der Federscheibe 133 mit der Mutter 134 einstellbar ist (vgl. Figur 5).

Die Schutzhaube 16 ist durch eine Schutzhaubenführung 15 mit dem Tragarm 13 verbunden. Diese Schutzhaubenführung 15 ist schwalbenschwanzartig und mit einer Klemmvorrichtung 151 (Fig. 5) versehen, so daß die Schutzhaube lagefixierbar, aber auch verschieblich und auswechselbar gehaltert ist. Das Verschieben kann nötig werden, wenn man die Größe oder das Hervortreten des Sägeblatts 22 verändert; man kann dann die Vorderseite 221 des Sägeblatts 22 in eine günstige Lage zum in der Sichtöffnung 162 angebrachten Fenster 163 bringen.

Ferner kann man die üblicherweise ausreichende, schmale Schutzhaube 16 gegen eine (nicht dargestellte) breitere Schutzhaube auswechseln, wenn diese beispielsweise wegen eines schräggestellten Sägeblatts nötig erscheinen sollte.

Das Fenster 163 kann ausgewechselt werden, wobei man nur die Kufen 164 der Schutzhaube 16 abzuziehen braucht.

Um die Schutzhaube an eine nicht dargestellte, an sich bekannte Absaugvorrichtung anzuschließen, beispielsweise über einen Schlauch, ist sie mit einem Absaugstutzen 165 versehen.

## Patentansprüche

1. Schutzvorrichtung für Kreissägen (2) mit einer Schutzhaube (16) zum Abdecken eines aus einem Tisch (21) nach oben vorstehenden Sägeblatts (22), wobei die zum Absaugen von Sägespänen eingerichtete Schutzhaube (16) durch zwei eine Parallelogrammführung bildende Tragarme (13, 130) an einem Gestell (11) über Schwenkachsen (12, 120) in der Höhe schwenkbar so gelagert ist, daß sie in ihrer Ruhestellung auf dem Tisch (21) aufliegend das Sägeblatt (22) überdeckt, durch ein auf dem Tisch (21) zum Sägeblatt (22) hin zugeführtes Werkstück (3) an ihrer schräg nach oben geneigten Einlaufseite (161) erfaßt und begrenzt angehoben wird und nach dem Durchschieben des Werkstücks (3) selbsttätig in die Ruhestellung zurückkehrt, dadurch gekennzeichnet, daß koaxial zur Schwenkachse (12) eines der beiden Tragarme (13) ein hebelförmiger Heber (131) über eine Bremse (132) schwenkbar am Gestell (11) gelagert ist, über den die Parallelogrammführung der Schutzhaube (16) über dem Tisch (21) in Höhenlagen anhebbar und dort abstützbar ist, aus welchen Höhenlagen die Schutzhaube (16) durch ein zugeführtes Werkstück (3) ohne zusätzliche Betätigung des Hebers (131) begrenzt nochmals anhebbar ist.

2. Schutzvorrichtung nach Anspruch 1, dadurch gekennzeichnet, daß die Bremse (132) eine Reibschluß erzeugende, einstellbare Feder (133) aufweist.

3. Schutzvorrichtung nach Anspruch 1 oder 2, dadurch gekennzeichnet, daß in der Parallelogrammführung eine einstellbare Ausgleichsfeder (14) zur teilweisen Kompensierung des Gewichtes der Schutzhaube (16) angebracht ist.

4. Schutzvorrichtung nach einem der vorhergehenden Ansprüche, dadurch gekennzeichnet, daß die Schutzhaube (16) an ihrer Einlaufseite (161) eine durch ein auswechselbares Fenster (163) verschlossene Sichtöffnung (162) zum Sägen nach Sicht aufweist.

5. Schutzvorrichtung nach einem der vorhergehenden Ansprüche, dadurch gekennzeichnet, daß die Schutzhaube (16) am Tragarm (13) in einer Schutzhaubenführung (15) horizontal verschieblich feststellbar und auswechselbar ist.

6. Schutzvorrichtung nach einem der vorhergehenden Ansprüche, dadurch gekennzeichnet, daß die Schutzhaube (16) transparent bis durchsichtig ist.

7. Schutzvorrichtung nach einem der vorhergehenden Ansprüche, dadurch gekennzeichnet, daß die Schutzhaube (16) auswechselbare Kufen (164) aufweist.

## Claims

1. A safety device for circular saws (2) with a safety hood (16) to cover a saw blade (22) projecting upwards from a bench (21), said safety hood (16) being installed to remove sawdust by suction and being pivotably mounted as to height, via pivot axes (12, 120), on a support (11) by means of two supporting arms (13, 130) forming a parallelogram suspension so that said hood, in its home position resting on the bench (21), covers the saw blade (22) and is engaged and slightly raised on its diagonally upward sloping intake side (161) by a workpiece (3) conveyed to the saw blade (22) on the bench (21), which hood automatically returns to the home position after the workpiece (3) has been pushed through, characterised in that, coaxially with the pivot axis (12) of one of the two supporting arms (13), a lever-shaped lifter (131) is pivotably mounted to the support (11) via a brake (132), by means of which lifter the parallelogram suspension of the safety hood (16) can be raised in vertical positions above the bench (21) and be braced there, from which vertical positions the safety hood (16) can be slightly raised again by a conveyed workpiece (3) without additional operation of the lifter (131).

2. A safety device as claimed in Claim 1, characterised in that the brake (132) has an adjustable spring (133) producing a friction closure.

3. A safety device as claimed in Claim 1 or Claim 2, characterised in that an adjustable compensating spring (14) is positioned in the parallelogram suspension partly to compensate for the weight of the safety hood (16).

4. A safety device as claimed in one of the preceding claims, characterised in that the safety hood (16) on its intake side (161) has a sight opening (162) sealed by a removable window (163) for sight sawing.

5. A safety device as claimed in one of the preceding claims, characterised in that the safety hood (16) is securable and detachable on the supporting arm (13) by horizontal movement in a safety hood guide mechanism (15).

6. A safety device as claimed in one of the preceding claims, characterised in that the safety hood (16) is transparent to translucent.

7. A safety device as claimed in one of the preceding claims, characterised in that the safety hood (16) has detachable runners (164).

## Revendications

1. Dispositif de protection pour scies circulaires (2) comportant un capot protecteur (16) pour recouvrir une lame (22) de scie circulaire qui dépasse d'un plateau (21) vers le haut, le capot protecteur (16), agencé pour aspirer la sciure, étant monté sur un châssis (11) de façon à pouvoir pivoter en hauteur autour de pivots (12, 120) au moyen de deux chaises (13, 130) formant un guidage par parallélogramme, de telle sorte que, dans sa position de repos, il recouvre la lame (22) de scie circulaire en s'appuyant sur le plateau (21), qu'il soit touché et soulevé de façon limitée par une pièce d'oeuvre (3) amenée sur le plateau (21) vers la lame (22) de scie circulaire au niveau de sa face d'admission (161) inclinée vers le haut et qu'il retourne automatiquement en position de repos après le passage de la pièce d'oeuvre (3),caractérisé en ce qu'un bras de levage (131) en forme de levier est monté pivotant sur le châssis (11), coaxialement avec le pivot (12) d'une des deux chaises (13) par l'intermédiaire d'un frein (132), bras de levage par l'intermédiaire duquel le guidage par parallélogramme du capot protecteur (16) au dessus du plateau (21) peut être levé à différentes hauteurs et y être maintenu, à partir desquelles le capot protecteur (16) peut être soulevé encore plus haut de façon limitée, sans actionnement supplémentaire au bras de levage (131), par une pièce d'oeuvre (3) amenée.

2. Dispositif de protection selon la revendication 1, caractérisé en ce que le frein (132) présente un ressort (133) réglable produisant un entraînement par friction.

3. Dispositif de protection selon la revendication 1 ou 2, caractérisé en ce qu'un ressort compensateur (14) réglable est placé dans le guidage par parallélogramme pour compenser partiellement le poids du capot protecteur (16).

4. Dispositif de protection selon l'une des revendications précédentes, caractérisé en ce que le capot protecteur (16) présente, au niveau de son côté d'admission (161), une ouverture de visibilité (162) close au moyen d'une fenêtre (163) remplaçable pour scier à vue.

5. Dispositif de protection selon l'une des revendications précédentes, caractérisé en ce que le capot protecteur (16) peut être fixé et remplacé dans une glissière (15) de capot protecteur au niveau de la chaise (13) en étant déplacé horizontalement.

6. Dispositif de protection selon l'une des revendications précédentes, caractérisé en ce que le capot protecteur (16) est de translucide à transparent.

7. Dispositif de protection selon l'une des revendications précédentes, caractérisé en ce que le capot protecteur (16) présente des patins (164) remplaçables.
